# EUROPÄISCHE PATENTSCHRIFT

(11) **EP 0 570 667 B1**
(45) Veröffentlichungstag und Bekanntmachung des Hinweises auf die Patenterteilung: **15.11.1995**
(21) Anmeldenummer: 93102416.0
(22) Anmeldetag: 16.02.1993
(51) Int. Cl.: F16L 37/10

(54) **Klemmverbindung aus Kunststoff**
Plastic clamping connection
Connection de serrage en plastique

(30) Priorität: 19.05.1992 DE 4216518
(43) Veröffentlichungstag der Anmeldung: 24.11.1993
(73) Patentinhaber: TRW United-Carr GmbH & Co. KG, D-67677 Enkenbach-Alsenborn (DE)
(72) Erfinder: Rückwardt, Hans-Werner, W-6719 Eisenberg (DE)
(74) Vertreter: Schieschke, Klaus, Dipl.-Ing.

(56) Entgegenhaltungen:
- EP-A- 0 367 136
- EP-A- 0 448 790
- CH-A- 471 997
- DE-A- 1 775 427
- DE-A- 1 912 316
- US-A- 2 457 523

## Beschreibung

Die Erfindung bezieht sich auf eine Klemmverbindung aus Kunststoff, mit einem hülsenförmigen Element, welches in einem ersten Endbereich mit einem rohrförmigen Teil und in einem zweiten, von einer drehbaren Klemmhülse überdeckten Endbereich in einem Anschlußstück verbindbar ist, wobei zwischen dem Außenumfang des hülsenförmigen Elements und dem Innenumfang der Klemmhülse mindestens ein bajonettförmiger Verschlußteil angeordnet ist.

Allgemein bekannter Stand der Technik ist, zwei rohr- oder schlauchförmige Teile, welche jeweils mit einem Anschlußstück bzw. einem hülsenförmigen Endelement versehen sind, durch eine Klemmverbindung aus Kunststoff funktionssicher miteinander zu verbinden, wobei diese Verbindung durch eine drehbare Klemmhülse hergestellt wird, welche bajonettförmige Verschlußteile beaufschlagt und damit die Klemmverbindung aus einer Offenstellung in eine Schließstellung überführt (siehe z.B. DE-A-1 912 316).

Aufgabe der vorliegenden Erfindung ist es, eine derartige Klemmverbindung so zu verbessern, daß bei einfachem Aufbau eine einwandfreie und sichere Halterung der miteinander zu kuppelnden rohrförmigen Teile gewährleistet ist.

Diese Aufgabe wird erfindungsgemäß dadurch gelöst, daß das hülsenförmige Element mindestens zwei über den Umfang verteilte, durch die Klemmhülse federnd gegen die Innenwandung verstellbare Verschlußteile aufweist und d93102416 aß in Schließstellung jeweils ein Bereich des Verschlußteils das Anschlußstück über eine Rastverbindung verriegelt und ein anderer Bereich das Anschlußstück justiert. Hierdurch ergibt sich der Vorteil einer einfach aufgebauten Klemmverbindung, wobei die Verschlußteile Doppelfunktionen übernehmen, nämlich einmal - entsprechend ihrer Funktion - das Schließlelement darstellen und zum anderen gleichzeitig Verriegelungs- und Justierfunktion in axialer Richtung ausüben.

Um die Klemmverbindung mediendicht, beispielsweise beim Durchlauf von Wasser, Öl oder anderen Medien zu gestalten, kann in weiterer Ausgestaltung der Erfindung das hülsenförmige Element innenseitig vor den Verschlußteilen einen stirnseitig von dem Anschlußstück beaufschlagbaren Dichtring aufweisen. Dieser Dichtring kann als Einzelteil ausgebildet - oder im Zweikomponentenspritzverfahren mit dem hülsenförmigen Element hergestellt sein. In diesem Zusammenhang kann das hülsenförmige Element innenseitig und in einem ersten Endbereich eine umlaufende Nut zur Einlagerung der Dichtung aufweisen.

In weiterer Ausgestaltung der Erfindung kann der eine Teil der Klemmverbindung, nämlich das Anschlußstück einen in dem zweiten Endbereich des hülsenförmigen Elements einsetzbaren Hohlzylinder aufweisen, welcher stirnseitig in eine Wulst übergeht, wobei die Wulst in Schließstellung einerseits mit ihrem vorderen Bereich den Dichtring beaufschlagt und andererseits mit ihrem hinteren Bereich einen Teil der mit dem benachbarten Bereich der Verschlußteile zusammenwirkenden Rastvorrichtung bildet. Hierbei kann die Wulst des Anschlußstückes vorteilhafterweise umlaufend ausgebildet sein.

Die Gestaltung der Verschlußteile ist nach einem anderen Merkmal der Erfindung so, daß die Wandung des hülsenförmigen Elements an gegenüberliegenden Seiten L-förmig hinterschnitten ist, wobei die Oberseite des jeweils hinterschnittenen Bereichs in Offenstellung schalenförmig gewölbt ausgebildet ist und in Schließstellung durch Beaufschlagung der Innenwandung der Klemmhülse federnd an dieser Innenwandung anliegt und damit die beiden Endbereiche bildet. Damit ergibt sich eine Art Schnappeffekt der Verschlußteile, wodurch diese die beiden Endbereiche bilden und damit einerseits die Justierung und andererseits die Verriegelung vornehmen.

Um die Montage zu erleichtern, kann in weiterer Ausgestaltung der Erfindung das hülsenförmige Element am Außenumfang mindestens zwei mit der Innenwandung der Klemmhülse zusammenwirkende Einführschrägen aufweisen. Diese Einführschrägen sind jeweils neben den Verschlußteilen angeordnet. Weiterhin kann die Klemmhülse auf die Verschlußteile abgestellte Aussparungen aufweisen. Hierbei ist vorteilhafterweise die Länge der Aussparungen jeweils auf die gemeinsame Umfangslänge von Verschlußteil und benachbarter Einführschräge abgestellt.

Vorteilhafte Weiterbildungen ergeben sich aus den weiteren Unteransprüchen.

Die Erfindung wird nachfolgend anhand von in der Zeichnung dargestellten Ausführungsbeispielen näher beschrieben.

In der Zeichnung zeigen:
- Fig. 1: einen Querschnitt durch ein mit der erfindungsgemäßen Klemmverbindung zu verbindenden Anschlußstück;
- Fig. 2: die erfindungsgemäße Klemmverbindung vor Einführung des in Fig. 1 dargestellten Anschlußstücks im Mittelschnitt;
- Fig. 3: die fertig montierte Klemmverbindung im Mittelschnitt;
- Fig. 4: einen Schnitt durch die Klemmhülse;
- Fig. 5: eine Vorderansicht der Klemmhülse nach Fig. 4;
- Fig. 6: einen Schnitt nach der Linie VI-VI in Fig. 7, d.h. einen Schnitt durch das hülsenförmige Element;
- Fig. 7: eine Vorderansicht des hülsenförmigen Elements;
- Fig. 8: eine andere Ausführungsform des hülsenförmigen Elements im Schnitt analog Fig. 7;
- Fig. 9: eine andere Ausführungsform der Wulst des Anschlußstückes im Schnitt, teils gebrochen;
- Fig. 10: eine andere Ausführungsform der Klemmverbindung vor Einführung des Anschlußstückes im Mittelschnitt;
- Fig.11: die fertig montierte Klemmverbindung im Mittelschnitt, in der Ausführungsform nach Fig. 9 und 10;
- Fig.12: eine andere Ausführungsvariante der fertig montierten Klemmverbindung im Mittelschnitt.

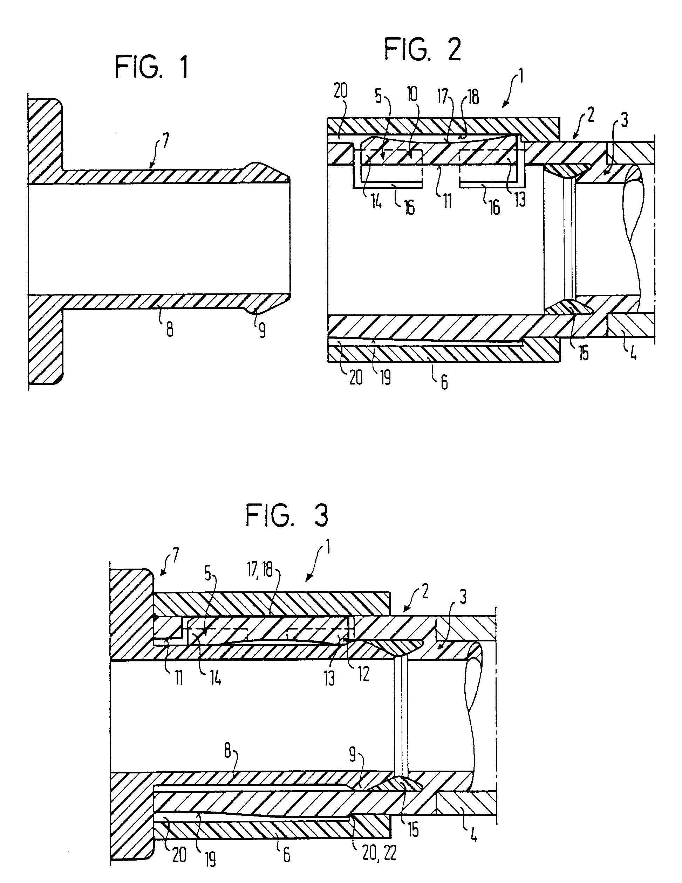

In Fig. 1 ist ein Anschlußstück 7 dargestellt, welches einen Hohlzylinder aufweist, der vorderseitig mit einer vorzugsweise umlaufenden Wulst 9 versehen ist. Der der Wulst 9 gegenüberliegende Endbereich des Anschlußstücks 7 kann beliebig ausgebildet sein - beispielsweise wie im vorliegenden Fall - als Flansch.

Fig. 2 zeigt die erfindungsgemäße Klemmverbindung 1, welche im wesentlichen aus einem hülsenförmigen Element 2 und einer um die Mittelachse drehbaren Klemmhülse 6 besteht. Wie ersichtlich, weist das hülsenförmige Element 2 einen ersten Endbereich 3 auf, welcher beispielsweise mit einem rohrförmigen Teil 4 dicht verbunden ist. Dieses rohrförmige Teil 4 ist in Fig. 2, 3 und 6 nur schematisch dargestellt.

Ein zweiter Endbereich 5 des hülsenförmigen Teils 2 weist mindestens zwei über den Umfang verteilte Verschlußteile 10 auf, welche im Bereich der Innenwandung 11 liegen und durch die drehbare Klemmhülse 6 betätigbar sind. Die Oberseiten 17 dieser beiden Verschlußteile sind schalenförmig gewölbt und liegen zwischen einem Bereich 13 und einem Bereich 14.

An dem vorderen Ende des ersten Endbereichs 3 weist das hülsenförmige Element 2 eine umlaufende Nut 23 auf, in welcher ein Dichtring 15 eingelagert ist. Dieser Dichtring 15 ist entweder als Einzelteil ausgebildet und wird in die Nut 23 eingebracht; es besteht alternativ auch die Möglichkeit, daß der Dichtring 15 zusammen mit dem hülsenförmigen Element 2 im Zweikomponentenspritzverfahren hergestellt wird.

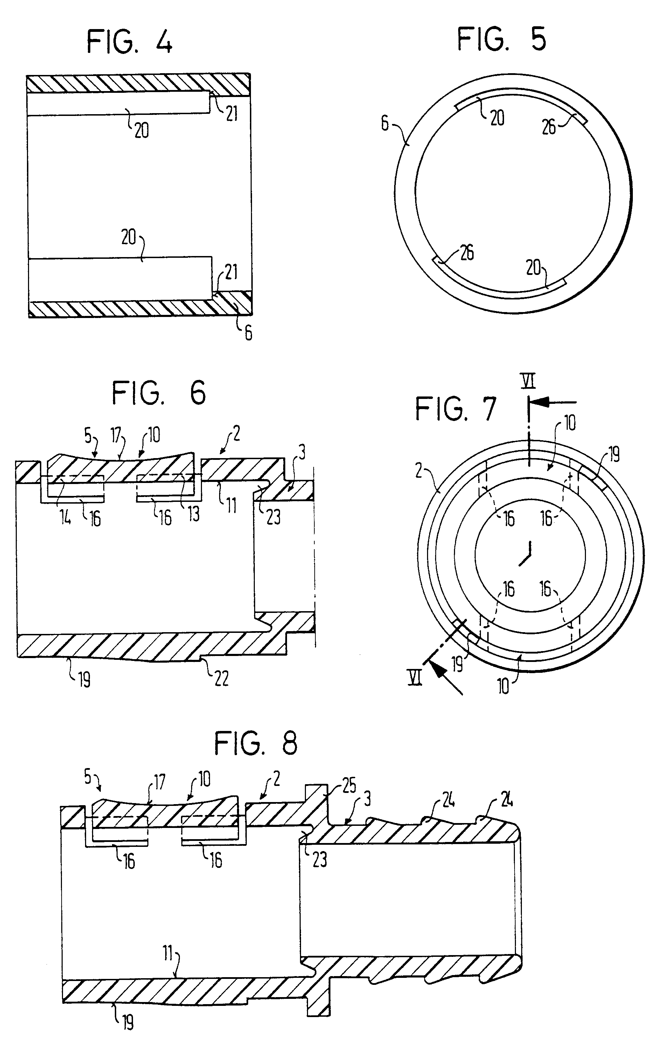

Fig. 3 stellt die erfindungsgemäße Klemmverbindung 1 nach Durchführung der Montage dar: Wie ersichtlich, ist das Anschlußstück 7 so in die Innenwandung 11 des hülsenförmigen Elements 2 eingeschoben, daß der Hohlzylinder 8 im Inneren des zweiten Endbereichs 5 des hülsenförmigen Elements 2 eingelagert ist. Die Wulst 9 beaufschlagt mit ihrer Vorderseite die Dichtung 15 und stellt damit zwischen dem Anschlußstück 7 und dem rohrförmigen Teil 4 eine absolut dichte Verbindung her.

Durch Drehen der Klemmhülse 6, welche das hülsenförmige Element 2 umgibt, beaufschlagen stärker ausgebildete Wandteile der drehbaren Klemmhülse 6 die beiden Randbereiche der schalenförmigen Oberseite 17 des jeweiligen Verschlußteils 10. Dadurch ergibt sich in einer Art Schnappwirkung, daß gemäß Fig. 3 nunmehr unterhalb der Oberseite 17, welche an der Innenwandung 18 der drehbaren Klemmhülse 6 anliegt, eine Schalenform entsteht, mit den beiden Endbereichen 13 und 14. Wie ersichtlich, rastet der Endbereich 13 hinter die Wulst 9 des Anschlußstücks 7 und bildet damit eine Verriegelung. Der andere Endbereich 14 liegt am Außenunmfang des Hohlzylinders 8 an und stabilisiert damit das ganze System auf dem Anschlußstück 7. Damit ist die Montage beendet und die Klemmverbindung 1 verbindet dicht und funktionssicher das Anschlußstück 7 mit dem rohrförmigen Teil 4.

Fig. 4 zeigt die Klemmhülse 6 im Schnitt. Wie ersichtlich, weist die Klemmhülse Aussparungen 20 auf, welche bezüglich ihrer Abmessungen auf die Verschlußteile 10 des hülsenförmigen Elements 2 angepaßt sind. Hierbei ist die Länge der Aussparungen 20 jeweils auf die Umfangslänge der Verschlußteile 10 abgestellt. Darüber hinaus ist aus Fig. 5 ersichtlich, daß diagonal gegenüberliegend die Aussparungen 20 Bereiche 26 aufweisen, welche zur Aufnahme von in Fig. 6 und 7 dargestellten Einführschrägen 19 des hülsenförmigen Elements 2 dienen.

In Fig. 6 und 7 ist dieses hülsenförmige Element in Vorderansicht und im Schnitt VI-VI dargestellt. Wie ersichtlich, weist der zweite Endbereich 5 zwei diagonal einander gegenüberliegende Verschlußteile 10 auf. Zur Bildung dieser Verschlußteile 10 ist die Wandung 11 des hülsenförmigen Elements 2 an gegenüberliegenden Seiten L-förmig hinterschnitten. Die Oberseite 17 des jeweils hinterschnittenen Bereichs ist - wie in Fig. 2 und 6 dargestellt - schalenförmig gewölbt. Weiterhin weist das hülsenförmige Element 2 Einführschrägen 19 auf, welche entsprechend Fig. 7 jeweils neben den Verschlußteilen 10 angeordnet sind.

Die Länge der Aussparungen 20 der Klemmhülse 6 ist nun gemäß Fig. 5 jeweils auf die gemeinsame Umfangslänge von Verschlußteil 10 und benachbarter Einführschräge 19 abgestellt. Die im Inneren der Klemmhülse 6 liegenden Endbereiche der Aussparungen 20 bilden jeweils Schultern 21.

Zur Vormontage der Klemmhülse 6 mit dem hülsenförmigen Element 2 wird die Klemmhülse 6 über den ersten Endbereich 5 des hülsenförmigen Elements 2 geschoben, bis die Schultern 21 am Ende der Aussparungen 20 der Klemmhülse 6 die federnden Bereiche 13 der beiden Verschlußteile 10 hintergreifen. Zur Erleichterung dieser Montage dienen die diagonal einander gegenüberliegenden Einführschrägen 19 des hülsenförmigen Elements, welche sich in den Bereichen 26 der Aussparungen 20 der Klemmhülse 6 einlagern.

Nach Durchführung dieser Vormontage ist damit eine Situation nach Fig. 2 gegeben. Der erste Endbereich 3 des hülsenförmigen Elements 2 kann beliebig gestaltet sein. Er muß nur so geschaffen sein, daß er in dichter Weise mit dem rohrförmigen Teil 4 oder einem anderen Teil zu verbinden ist.

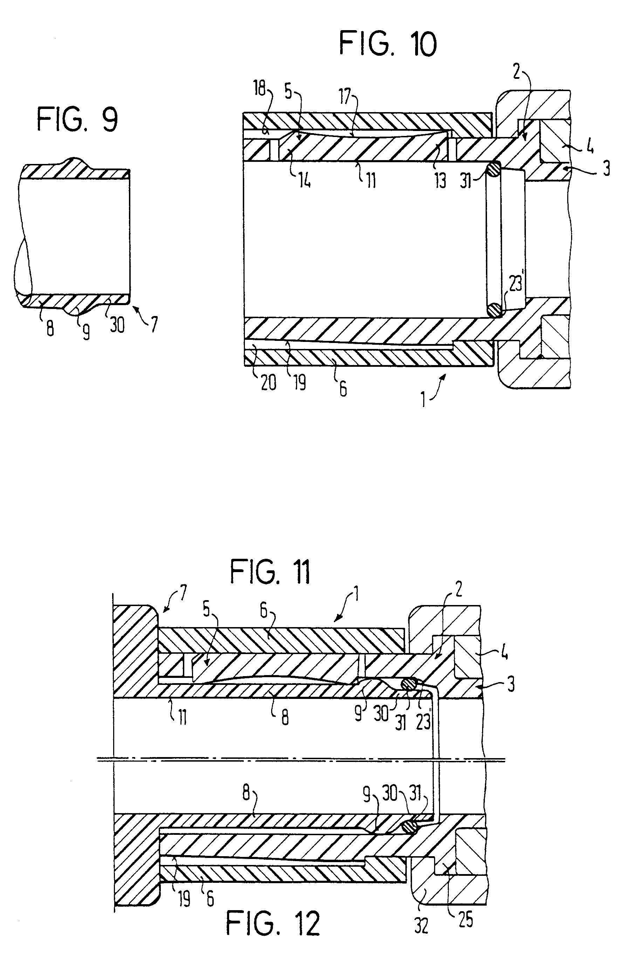

Fig. 8 zeigt eine mögliche Ausführungsform des ersten Endbereichs 3. Wie ersichtlich, ist der erste Endbereich 3 des hülsenförmigen Elements 2 als Hohlzylinder ausgebildet. Dieser Hohlzylinder ist mit mindestens einer umlaufenden Haltewulst 24 versehen, welcher zur Befestigung eines als Schlauch ausgebildeten rohrförmigen Teils 4 dient. Weiterhin kann eine Schulter 25 im vorderen Teil des ersten Endbereichs 3 vorgesehen sein, damit ein einen nicht näher dargestellten Schlauch hintergreifendes weiteres Befestigungselement sich hinter dieser Schulter 25 einlagern kann.

Fig. 9 zeigt eine andere Ausführungsmöglichkeit des Anschlußstückes 7. Hierbei ist der Wulst 9 ein Hohlzylinder 30 vorgeordnet.

Während bei der Ausführungsform nach Fig. 2 und 3 der Dichtring 15 im Querschnitt etwa Dreiecksform aufweist, besteht nach Fig. 10 die Möglichkeit, daß der Dichtring als O-Ring 31 ausgebildet ist. Dieser O-Ring 31 legt sich in eine entsprechend gestaltete Nut 23' des hülsenförmigen Elements 2. Wiederum besteht die Möglichkeit, daß der Dichtring 31 als Einzelteil ausgebildet oder im Zweikomponentenspritzverfahren mit dem hülsenförmigen Element 2 hergestellt ist.

Fig. 11 zeigt die Klemmverbindung 1 im montierten Zustand: Wie ersichtlich, beaufschlagt der der Wulst 9 vorgeordnete Hohlzylinder 30 des Anschlußstücks 7 radial den O-Ring 31, so daß auch hierdurch eine sehr gute Dichtwirkung erzielt wird.

Alternativ besteht nach Fig. 12 auch die Möglichkeit, daß der O-Ring 31 seitlich von dem Wulst 9 und innenseitig radial von dem Hohlzylinder 30 des Anschlußstücks 7 beaufschlagt wird.

Hierdurch ergibt sich eine zusätzliche Verbesserung der Dichtwirkung.

Bei den Ausführungsbeispielen nach Fig. 10 - 12 ist außerdem dargestellt, wie die Schulter 25 des hülsenförmigen Elements 2 von einem Flansch 32 eines nicht näher dargestellten Befestigungselements übergriffen wird, so daß das rohrförmige Teil 4 hierdurch eine dichte und sichere Verbindung mit dem hülsenförmigen Element 2 erfährt.

Insgesamt wird damit eine funktionssichere, einfach aufgebaute Klemmverbindung 1 geschaffen, welche die zu verbindenen Teile nicht nur dicht aneinander anschließt, sondern auch in ihrer Lage gegeneinander stabilisiert.

## Patentansprüche

1. Klemmverbindung aus Kunststoff, mit einem hülsenförmigen Element (2), welches in einem ersten Endbereich (3) mit einem rohr-förmigen Teil (4) und in einem zweiten, von einer drehbaren Klemmhülse (6) überdeckten Endbereich (5) mit einem Anschlußstück (7) verbindbar ist, wobei zwischen dem Außenumfang des hülsenförmigen Elements (2) und dem Innenumfang der Klemmhülse (6) mindestens ein bajonettförmiger Verschluß angeordnet ist, wobei
das hülsenförmige Element (2) mindestens zwei über den Umfang verteilte, durch die Klemmhülse (6) federnd gegen die Innenwandung (11) verstellbare Verschlußteile (10) aufweist und
in Schließstellung jeweils ein Bereich (13) des jeweiligen Verschlußteils (10) das Anschlußstück (7) über eine Rastverbindung (12) verriegelt, dadurch gekennzeichnet, daß ein anderer Bereich (14) des Verschlußteils (10) das Anschlußstück (7) justiert.

2. Klemmverbindung nach Anspruch 1, dadurch gekennzeichnet, daß das hülsenförmige Element (2) innenseitig vor den Verschlußteilen (10) einen von dem Anschlußstück (7) beaufschlagbaren Dichtring (15) aufweist.

3. Klemmverbindung nach Anspruch 2, dadurch gekennzeichnet, daß der Dichtring (15) als Einzelteil ausgebildet oder in Zweikomponentenspritzverfahren mit dem hülsenförmigen Element (2) hergestellt ist.

4. Klemmverbindung nach einem der vorhergehenden Ansprüche, dadurch gekennzeichnet, daß das Anschlußstück (7) einen in den zweiten Endbereich (5) des hülsenförmigen Elements (2) einsetzbaren Hohlzylinder (8) aufweist, welcher stirnseitig in einer Wulst (9) übergeht und
daß die Wulst (9) in Schließstellung einerseits mit ihrem vorderen Bereich den Dichtring (15) beaufschlagt und andererseits mit ihrem hinteren Bereich einen Teil der mit den benachbarten Bereich (13) der Verschlußteile (10) zusammenwirkenden Rastvorrichtungen (12) bildet.

5. Klemmverbindung nach Anspruch 4, dadurch gekennzeichnet, daß die Wulst (9) umlaufend ausgebildet ist.

6. Klemmverbindung nach einem der vorhergehenden Ansprüche, dadurch gekennzeichnet, daß zur Bildung der Verschlußteile (10) die Wandung des hülsenförmigen Elements (2) an gegentiberliegenden Seiten L-förmig hinterschnitten ist und daß die obere Seite (17) des jeweils hinterschnittenen Bereichs in Offenstellung schalenförmig gewölbt ausgebildet ist und in Schließstellung durch Beaufschlagung der Innenwandung der Klemmhülse (6) federnd an dieser Innenwand (18) anliegt und dabei die beiden Endbereiche (13, 14) bildet.

7. Klemmverbindung nach einem der vorhergehenden Ansprüche, dadurch gekennzeichnet, daß das hülsenförmige Element (2) am Außenumfang mindestens zwei, mit der Innenwandung (18) der Klemmhülse (6) zusammenwirkende Einführschrägen (19) aufweist.

8. Klemmverbindung nach Anspruch 7, dadurch gekennzeichnet, daß die Einführschrägen (19) jeweils neben den Verschlußteilen (10) angeordnet sind.

9. Klemmverbindung nach einem der vorhergehenden Ansprüche, dadurch gekennzeichnet, daß die Klemmhülse (6) auf die Verschlußteile (10) abgestellte Aussparungen (20) aufweist.

10. Klemmverbindung nach Anspruch 8 und 9, dadurch gekennzeichnet, daß die Länge der Aussparungen (20) jeweils auf die gemeinsame Umfangslänge von Verschlußteil (10) und benachbarter Einführschräge (19) abgestellt ist.

11. Klemmverbindung nach einem der vorhergehenden Ansprüche, dadurch gekennzeichnet, daß die im Inneren der Klemmhülse (6) liegenden Endbereiche der Aussparungen (20) jeweils Schultern (21) bilden, welche in Offen-bzw. Schließstellung jeweils einen Bereich (13) der Verschlußteile (10) und die Einführschrägen (19) hintergreifen.

12. Klemmverbindung nach einem der vorhergehenden Ansprüche, dadurch gekennzeichnet, daß das hülsenförmige Element (2) innenseitig vor dem ersten Endbereich (3) eine umlaufende Nut (23) zur Einlagerung der Dichtung (15) aufweist.

13. Klemmverbindung nach einem der vorhergehenden Ansprüche, dadurch gekennzeichnet, daß der erste Endbereich (3) des hülsenförmigen Elements (2) als Hohlzylinder ausgebildet ist.

14. Klemmverbindung nach Anspruch 13, dadurch gekennzeichnet, daß der Hohlzylinder mit mindestens einer umlaufenden Haltewulst (24) zur Befestigung eines als Schlauch ausgebildeten rohrförmigen Teils (4) versehen ist.

15. Klemmverbindung nach Anspruch 14, dadurch gekennzeichnet, daß das hülsenförmige Element (2) zwischen den beiden Endbereichen (3, 4) einen umlaufenden Flansch (25) zum Hintergreifen für ein Befestigungsteil aufweist.

16. Klemmverbindung nach Anspruch 2, 3 und 12, dadurch gekennzeichnet, daß der Dichtring (15) im Querschnitt dreieckförmig ausgebildet ist.

17. Klemmverbindung nach Anspruch 2, 3 und 12, dadurch gekennzeichnet, daß der Dichtring als O-Ring (31) ausgebildet ist.

18. Klemmverbindung nach Anspruch 4, 5 und 17, dadurch gekennzeichnet, daß der Wulst (9) des Anschlußstücks (7) ein Hohlzylinder (30) vorgeordnet ist, welcher im montierten Zustand den O-Ring (31) innenseitig radial beaufschlagt.

19. Klemmverbindung nach Anspruch 18, dadurch gekennzeichnet, daß die Wulst (9) und der Hohlzylinder (30) den O-Ring (31) seitlich und innenseitig beaufschlagen.

## Claims

1. Plastic clamping connection, having a sleeve-shaped element (2) which can be connected in a first end region (3) to a tubular part (4) and, in a second end region (5) which is covered by a rotatable clamping sleeve (6), can be connected to a connection piece (7), at least one bayonet-type closure being arranged between the outer circumference of the sleeve-shaped element (2) and the inner circumference of the clamping sleeve (6), the sleeve-shaped element (2) having at least two closure parts (10) which are distributed over the circumference and can be adjusted resiliently against the inner wall (11) by the clamping sleeve (6), and a region (13) of the respective closure part (10) in each case locking the connection piece (6) by means of a catch connection (12) in the closed position, characterized in that another region (14) of the closure part adjusts the connection piece (7).

2. Clamping connection according to Claim 1, characterized in that the sleeve-shaped element (2) has, on the inside before the closure parts (10) a sealing ring (15) which can be acted upon by the connection piece (7).

3. Clamping connection according to Claim 2, characterized in that the sealing ring (15) is constructed as a single part or is produced in a two-component injection moulding process with the sleeve-shaped element (2).

4. Clamping connection according to one of the preceding claims, characterized in that the connection piece (7) has a hollow cylinder (8) which can be inserted in the second end region (5) of the sleeve-shaped element (2) and which merges into a bead (9) at the end face, and in that the bead (9) on the one hand acts upon the sealing ring (15) with its front region in the closed position and, on the other hand, with its rear region forms a part of the catch devices (12) which interact with the adjacent region (13) of the closure parts (10).

5. Clamping connection according to Claim 4, characterized in that the bead (9) is constructed to run all around.

6. Clamping connection according to one of the preceding claims, characterized in that, to form the closure parts (10), the wall of the sleeve-shaped element (2) is undercut in an L-shape on opposite sides, and in that the upper side (17) of the respectively undercut region is of shell-shaped curved construction in the open position and, in the closed position, by the action upon the inner wall of the clamping sleeve (6), bears resiliently against said inner wall (18) and, in so doing, forms the two end regions (13,14).

7. Clamping connection according to one of the preceding claims, characterized in that the sleeve-shaped element (2) has, on the outer circumference, at least two insertion slopes (19) which interact with the inner wall (18) of the clamping sleeve (6).

8. Clamping connection according to Claim 7, characterized in that the insertion slopes (19) are each arranged next to the closure parts (10).

9. Clamping connection according to one of the preceding claims, characterized in that the clamping sleeve (6) has cutouts (20) which are matched to the closure parts (10).

10. Clamping connection according to Claims 8 and 9, characterized in that the length of the cutouts (20) is matched in each case to the common peripheral length of the closure part (10) and the adjacent insertion slope (19).

11. Clamping connection according to one of the preceding claims, characterized in that the end regions of the cutouts (20) located inside the clamping sleeve (6) each form shoulders (21) which, in the open and closed position, each engage behind a region (13) of the closure parts (10) and behind the insertion slopes (19).

12. Clamping connection according to one of the preceding claims, characterized in that the sleeve-shaped element (2) has, on the inside before the first end region (3), a circumferencial groove (23) for accommodating the seal (15).

13. Clamping connection according to one of the preceding claims, characterized in that the first end region (3) of the sleeve-shaped element (2) is constructed as a hollow cylinder.

14. Clamping connection according to Claim 13, characterized in that the hollow cylinder is provided with at least one circumferencial holding bead (24) for fixing a tubular part (4) constructed as a hose.

15. Clamping connection according to Claim 14, characterized in that, between the two end regions (3, 4) the sleeve-shaped element (2) has a circumferential flange (25) for a fixing part to engage behind it.

16. Clamping connection according to Claims 2, 3 and 12, characterized in that the sealing ring (15) is constructed to be triangular in cross-section.

17. Clamping connection according to Claims 2, 3 and 12, characterized in that the sealing ring is constructed as an O-ring (31).

18. Clamping connection according to Claim 4, 5 and 17, characterized in that a hollow cylinder (30), which in the assembled state acts upon the O-ring (31) radially on the inside, is arranged ahead of the bead (9) of the connection piece (7).

19. Clamping connection according to Claim 18, characterized in that the bead (9) and the hollow cylinder (30) act upon the O-ring (31) laterally and on the inside.

## Revendications

1. Connexion de serrage en matière plastique, comportant un élément en forme de douille (2), qui peut être connecté dans une première zone d'extrémité (3) avec une partie tubulaire (4) et dans une seconde zone d'extrémité (5) revêtue d'une douille de serrage rotatif (6) avec un élément de liaison (7), entre la périphérie extérieure de l'élément en forme de douille (2) et la périphérie intérieure de la douille de serrage (6) un blocage de forme baïonnette étant au moins disposé, moyennant quoi l'élément en forme de douille (2) présente au moins deux éléments de liaison (10) répartis sur la périphérie, réglables par la douille de serrage (6) de façon élastique contre la paroi interne (11), et
dans la position de fermeture, une zone (13) de l'élément de blocage (10) verrouille chaque fois l'élément de liaison (7) par l'intermédiaire d'une connexion appliquée (12), et caractérisée en ce qu'une autre zone (14) de l'élément de blocage (10) ajuste l'élément de liaison (7).

2. Connexion de serrage selon la revendication 1, caractérisée en que l'élément en forme de douille (2) présente à l'intérieur devant les éléments de blocage (10) une bague d'étanchéité (15) sollicitée par l'élément de liaison (7).

3. Connexion de serrage selon la revendication 2, caractérisée en ce que la bague d'étanchéité (15) est conçue sous forme d'élément individuel ou est fabriquée dans un procédé par pulvérisation à deux composants avec l'élément en forme de douille (2).

4. Connexion de serrage selon l'une des revendications précédentes, caractérisée en ce que l'élément de liaison (7) présente un cylindre creux (8) pouvant être ajusté dans la seconde zone d'extrémité (5) de l'élément en forme de douille (2) qui forme un bourrelet (9) sur la partie avant et
en ce que le bourrelet (9) dans la position de fermeture d'une part sollicite par sa zone avant la bague d'étanchéité (15) et d'autre part par sa zone arrière une partie des dispositifs à appliquer (12) coopérant avec la zone avoisinante (13) des éléments de blocage (10).

5. Connexion de serrage selon la revendication 4, caractérisée en ce que le bourrelet (9) est conçu périphériquement.

6. Connexion de serrage selon l'une des revendications précédentes, caractérisée en ce que pour la formation des éléments de blocage (10) la paroi de l'élément en forme de douille (2) forme une dépouille en forme de L sur les côtés opposés et en ce que le côté supérieur (17) de la zone en contre-dépouille respective forme en position ouverte un creux en forme de coquille et dans la position de fermeture repose par sollicitation de la paroi interne de la douille de serrage (6) de façon élastique sur cette paroi interne (18) et forme se faisant les deux zones d'extrémité (13, 14).

7. Connexion de serrage selon l'une des revendications précédentes, caractérisée en ce que l'élément en forme de douille (2) sur la périphérie extérieure présente au moins deux fraisages d'introduction (19) coopérant avec la paroi interne (18) de la douille de serrage (6).

8. Connexion de serrage selon la revendication 7, caractérisée en ce que les chanfreins d'introduction (19) sont chaque fois disposés à proximité des éléments de blocage (10).

9. Connexion de serrage selon l'une des revendications précédentes, caractérisée en ce que la douille de serrage (6) présente des évidements (20) pratiqués sur les parties de blocage (10).

10. Connexion de serrage selon la revendication 8 et 9, caractérisée en ce que la longueur des évidements (20) est chaque fois ajustée à la longueur périphérique commune de la partie de blocage (10) et du chanfrein d'introduction contigu (19).

11. Connexion de serrage selon l'une des revendications précédentes, caractérisée en ce que les zones d'extrémités situées à l'intérieur de la douille de serrage (6) des évidements (20) forment respectivement des épaulements (21) qui dans la position d'ouverture ou de fermeture coopèrent chaque fois avec une zone (13) des parties de blocage (10) et des chanfreins d'introduction (19).

12. Connexion de serrage selon l'une des revendications précédentes, caractérisée en ce que l'élément en forme de douille (2) présente à l'intérieur avant la première zone d'extrémité (3) une gorge périphérique (23) pour le logement de la bague d'étanchéité (15).

13. Connexion de serrage selon l'une des revendications précédentes, caractérisée en ce que la première zone d'extrémité (3) de l'élément en forme de douille (2) est conçue en forme de cylindre creux.

14. Connexion de serrage selon la revendication 13, caractérisée en ce que le cylindre creux est doté d'au moins un bourrelet de retenue périphérique (24) pour la fixation d'une partie tubulaire conçue en forme de tuyau flexible (4).

15. Connexion de serrage selon la revendication 14, caractérisée en ce que l'élément en forme de douille (2) présente entre les deux zones d'extrémité (3, 4) une bride périphérique (24) destinée à coopérer avec un élément de fixation.

16. Connexion de serrage selon la revendication 2, 3 et 12, caractérisée en ce que la bague d'étanchéité (15) est de section transversale triangulaire.

17. Connexion de serrage selon la revendication 2, 3 et 12, caractérisée en ce que la bague d'étanchéité est également conçue sous forme de joint torique (31).

18. Connexion de serrage selon la revendication 4, 5 et 17, caractérisée en ce que le bourrelet (9) de l'élément de liaison (7) est placé en amont d'un cylindre creux (30) qui à l'état monté vient solliciter radialement à l'intérieur le joint torique (31).

19. Connexion de serrage selon la revendication 18, caractérisée en ce que le bourrelet (9) et le cylindre creux (30) sollicite le joint torique (31) latéralement et vers l'intérieur.
